# EUROPEAN PATENT APPLICATION

(11) **EP 1 233 331 A2**
(43) Date of publication of application: **21.08.2002**
(21) Application number: 02003587.9
(22) Date of filing: 15.02.2002
(51) Int. Cl.: G06F 3/12

(54) **Printing system, printer client and service server system**

(30) Priority: 20.02.2001 JP 2001043131
(71) Applicant: KONICA CORPORATION, Tokyo (JP)
(72) Inventor: Inai, Masayuki, Hino-shi, Tokyo 191-8511 (JP); Kobayashi, Toru, Hachioji-shi, Tokyo 192-8505 (JP); Yanagimachi, Noriyuki, c/o Konica Corporation, Tokyo 163-0512 (JP); Nakazawa, Toshihiko, Hachioji-shi, Tokyo 192-8505 (JP); Yamazaki, Hirohiko, Hachioji-shi, Tokyo 192-8505 (JP)
(74) Representative: Henkel, Feiler, Hänzel

(57) **Abstract**

The printing system includes a service server system, from which data is downloaded, and a printer client downloads the data and conducts image output based on the data. In the printing system, the service server system acquires information to specify the printer client from the printer client itself that requests access to the service server system. The service server system specifies abstract data, allowed to be transmitted to the printer client, in accordance with a copyright protection level and the printer client downloads the abstract data specified by the service server system to conduct image output.

## Description

### BACKGROUND OF THE INVENTION

The present invention relates to a technology wherein data requested by a printer are transmitted through the network to the printer for printing.

As a form of electronic publication, there is a demand to offer a publication to a user by downloading digital data relating to books from a server connected with the internet and then by printing. However, an offerer of digital data relating to books fears that digital data can be reproduced without any restriction, and unlawful reproduction may sometimes be carried out, and has a tendency to restrain from offering digital data concerning books from which an income of a royalty is expected. Incidentally, digital data concerning books include literary works, scientific papers, dictionaries, magazines and other books, and photographs and pictures are sometimes included. In addition, those wherein literary work is not the majority such as photographic albums, suites of drawings and atlases are also included in digital data in place of books.

TOKKAKHEI No. 7-239828 discloses a technology to prevent unlawful copies for digital data, and TOKKAKHEI No. 6-103286 discloses a technology to compel payment of a royalty.

### SUMMARY OF THE INVENTION

Those who intend to purchase an ordinary book composed of printed paper sheets can decide purchasing after confirming contents of the book in advance at the store. However, when purchasing digital data based on the technologies described in TOKKAKHEI No. 6-103286 and TOKKAKHEI No. 7-239828, a purchaser is requested to decide purchasing without confirming contents of digital data in advance, and it sometimes happens that the purchaser has to pay for unnecessary data.

This is extremely disadvantageous for a purchaser, and it is a problem awaiting a solution.

With the background mentioned above, an object of the invention is to provide a printing system wherein contents of digital data can be outputted in advance to be confirmed before purchasing of the digital data is decided.

A problem in the invention can be solved by the printing system described as follows. Namely, the printing system of the invention is one in which data is downloaded from a service server system and a printer client conducts printing based on the data, wherein the service server system acquires information to specify a printer client from the printer client itself that requests access to the service server system, then, specifies abstract data, allowed to be transmitted to the printer client, in accordance with a copyright protection level, and the printer client downloads the abstract data specified by the service server system to conduct outputting.

The printing system of the invention is represented by a printing system which downloads data from a service server system and conducts printing with a printer client based on the data, wherein a printer client requests login to a service server system, the service server system certifies the request of log in by the printer client, the printer client specifies desired abstract data and notifies download request to the service server system, the service server system specifies the abstract data of copyright protection level whose transmission to the certified printer client is allowed, the printer client downloads from the service server system the transmission form data subjected to encrypted processing based on the specified abstract data, and the printer client decrypting the transmission form data and conducts outputting of the abstract data.

The printer client of the invention is represented by a printer client used for printing system which downloads data from a service server system and conducts printing with a printer client based on the data, wherein login is requested to the service server system, desired abstract data are specified, and download request is notified to the service server system, transform data subjected to encrypted processing based on abstract data of copyright protection level specified by the service server system are downloaded from the service server system, and the downloaded transmission form data are decrypted and output of the abstract data is conducted.

The service server system of the invention is represented by a service server system used for printing system which downloads data from a service server system and conducts printing with a printer client based on the data, wherein the login request of a printer client is certified, abstract data of copyright protection level whose transmission to the certified printer client is allowed are specified when download request is notified from the printer client, and transmission data subjected to encrypted processing are downloaded to the printer client based on the specified abstract data.

The printing system of the invention is represented by a printing system that downloads data from a service server system and conducts printing at a printer client based on the data, wherein the printer client is provided with a decrypting means that decrypts encrypted abstract data, an outputting means that outputs the abstract data which have been decrypted, and with a protecting means that protects a data transmission path covering from the decrypting means to the outputting means against access from the outside, the service server system is provided with a specifying means that is provided with a comparison table in which copyright protection level of a printer client established stepwise in accordance with the protecting means is tied in with copyright protection level of abstract data established stepwise in accordance with relative difficulty of restoration to original data, and refers to the comparison data about abstract data to be transmitted to the certified printer client and thereby specifies abstract data to the printer client in accordance with copyright protection level of the certified printer client and with an encrypting means that encrypts the specified abstract data, the service server system obtains information for specifying a printer client from the printer client that requests access to the service server system, and conducts the aforesaid specifying and encryption, and the printer client downloads the specified and encrypted abstract data of the service server system and conducts the decrypting and outputting.

### BRIEF DESCRIPTION OF THE DRAWINGS

Fig. 1 is an illustration showing the fundamental structure of a printing system.
Fig. 2 is a conceptual diagram wherein one page is picked up from printed matter such as a book to be shown.
Fig. 3 is a block diagram illustrating the detailed structure of a service server system.
Fig. 4 is a block diagram illustrating the detailed structure of a printer client.
Fig. 5 is a block diagram illustrating the detailed structure of a printer client.
Fig. 6 is a flow chart illustrating an outline of operations of the printing system in the first embodiment.
Fig. 7 is a flow chart illustrating further details about transmission and receiving of abstract data conducted by a printing system in the present embodiment.
Fig. 8 is a block diagram illustrating detailed structure of a service server system relating to a printing system in the second embodiment.
Fig. 9 is a flow chart illustrating further details about transmission and receiving of abstract data conducted by a printing system in the second embodiment.

### DETAILED, DESCRIPTION OF THE INVENTION

The first embodiment relating to the invention will be explained as follows, referring to the drawings.

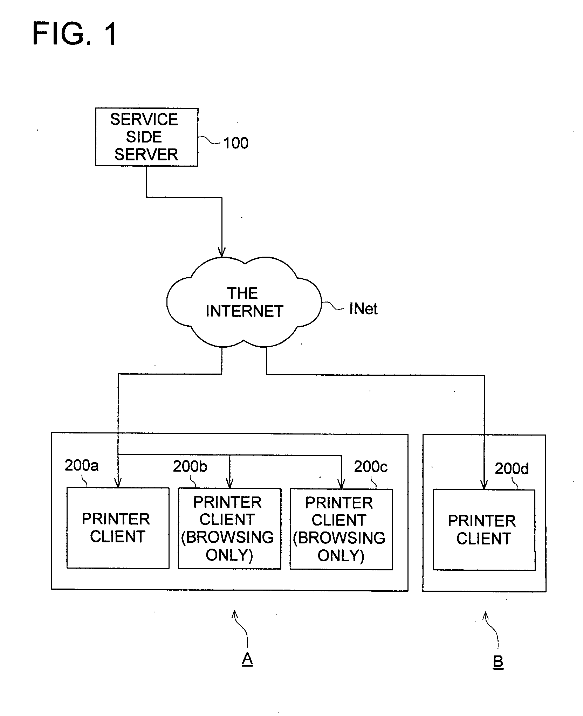

Fig. 1 is an illustration showing the fundamental structure of a printing system. The printing system is of the structure wherein transmission and receiving are conducted through the internet INet between a service side server and each of printer clients 200a - 200d.

The internet INet is an aggregate of a network wherein LANs (local area network) installed in research institutions, public institutions and enterprises are connected constantly each other by the WAN (wide area network) technologies, and it is a network which has been developed almost spontaneously to the scale to cover the whole world. A node capable of communicating by protocol (TPC/IP) used on the network can communicate by discriminating each other.

On the internet INet, IP address is used as a discriminator that discriminates each node, and it is also possible to designate directly the file stored in each node by means of URL (uniform resource locator). Service side server 100 provided in the printing system and pnode. Incidentally, in the following explanation, printer clients 200a - 200d are represented by printer client 200 when discrimination in the printer clients 200a - 200d is not necessary.

Service side server 100 is an example of a service server system of the invention which is controlled and installed by a publishing firm, and digital data (hereinafter referred to also as text data) relating to books are stored in a large capacity hard disc, and text data are transmitted to comply with a request from printer client 200. When transmitting text data, the text data are subjected to conversion, compression and encryption and then, are given digital signature to be transmitted. Further, abstract data which represent a summary of the text data are also stored equally, and they are transmitted to comply with a request from printer client 200.

The service side server 100 is on standby under the situation that it can offer to the printer client 200 the information about positions of data storage for text data and abstract data both stored in the service side server 100.

The printer client 200 downloads text data and abstract data from the service side server 100 based on the information about positions of data storage which the printer client 200 requested to the service side server 100 and obtained, and outputs (or prints or displays) them. "Downloading" in this case is used in a sense that the printer client 200 acquires data stored in the service side server 100, without limiting specific procedures or mutual operations between the service side server 100 and the printer client 200.

There exist an occasion wherein the printer client 200 is controlled by a convenience store or the like and is installed therein to be used freely by unspecific users, an occasion wherein the printer client 200 is installed in a place of business or the like to be used by only specific users such as employees of the place of business, and an occasion wherein the printer client 200 is owned by an individual.

The printer client 200 is available in a type capable of printing and displaying, and in a type where printing is impossible and display is possible. Hereinafter, the printer client wherein printing is impossible and displaying is possible may sometimes be called a browsing only printer client.

Each of client site A and client site B is a site equipped with at least one unit of printer client 200 which can be connected to the internet INet.

Site A is a site operated by facilities available to the public such as a libraries and convenience stores and a site which can be used only by limited users such as enterprises, and it is equipped with a plurality of printer clients 200. In addition to printer client 200a capable of printing, browsing only printer clients 200b and 200c which are not equipped with printer section 47 are provided on the site A.

Site B is a site to use printer client 200d having the structure wherein an ink jet printer or a laser printer is connected with a general-purpose personal computer in an individual home or in an independent trader.

Service side server 100 conducts acquisition of text data, calculation of accounting information for the printer client 200 which conducted printing and accounting processing based on the results of the calculation. Prior to accounting, the service side server 100 confirms the result of printing which is notified by the printing at the printer client 200, then, judges success/failure of the printing and conducts accounting processing in accordance with the results of printing.

The service side server 100 and the printer client 200 can conduct mutually communication encrypted in a public key system. Namely, each of them prevents successful impersonation under another node by decrypting a digital signature related to the received data with a public key, and prevents unlawful copying in another node by encrypting data to be transmitted with its own secret key.

The symbol d can display, from each printer client 200a, abstract data downloaded from the service side server 100, and the printer client 200a and d can print abstract data downloaded from the service side server 100. Further, the printer client 200a and d can print text data.

Next, abstract data will be explained.

Digital data related to books (hereinafter referred to also as text data) are books such as literary works, scientific papers, dictionaries, magazines and others, and they sometimes include photographs and pictures. Those wherein literary work is not main, such as photographic albums, suits of drawings and atlases are also included in the text data.

Main factors of the text data include text data, image data and layout information thereof. The text data are data related to writing by characters, and they are mainly enumeration of character codes. Image data are data related to drawings, photographs and tables (hereinafter referred to as drawings), and data format is free. Layout information is information about margins and the number of lines, the number of characters in a line, an interval between lines, a distance between characters, a font type, a font size and the number of pages, and the layout information represents parameters to control how to arrange (layout) characters related to text data', drawings related to image data, photographs and tables on the image screen to be displayed or on the printed matter.

When output (display or printing) is conducted based on the text data composed of the aforesaid main factors, text and drawings are laid out as a copyright holder intended to be displayed or printed.

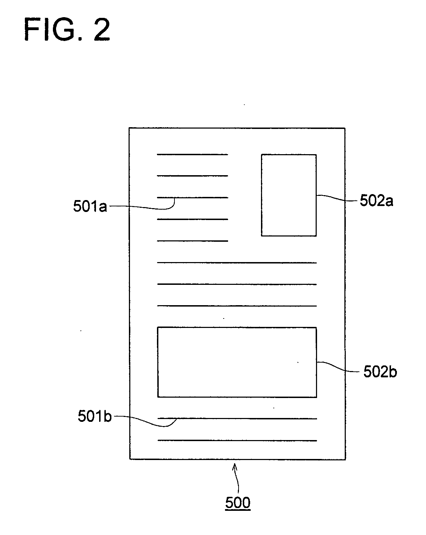

Fig. 2 is a conceptual diagram wherein one page is picked up from printed matter such as a book to be shown.

Printed matter 500 in Fig. 2 shows how printing is conducted on sheet surface based on text data, and written portions 501a and 501b represent a portion where characters are printed on sheet surface based on text data, and a layout position, a size and a font type of each character constituting the written portion 501a and 501b are determined based on layout information.

Each of image portions 501a and 501b represents a portion where an image is printed on sheet surface based on image data, and images constituting the image portions 502a and 502b are determined in terms of positions for arrangement based on layout information. Further, image data themselves are provided with information of resolution and the number of colors.

Though explanation by means of illustration is omitted, there are sometimes printed on other pages the displays for contents, indices and publishing offices as well as a preface and a postscript.

Incidentally, an example of the printed matter has been explained in Fig. 2 as an example of outputting, the same also applies to the occasion where an image is displayed on a monitor.

Abstract data are those obtained by modifying or extracting a part of text data, and following example can be employed as the abstract data.
(A) Only text data obtained by omitting image data and layout information from text data are made to be abstract data. When such abstract data are outputted, it is possible to read contents of the text by displaying text data.
(B) Extracts of text data are made to be abstract data. When such abstract data are outputted, it is possible to read contents of the text and to confirm quality of drawings and quality of layout, because an output wherein text and drawings are laid out equally to the text data is possible, though there is a limit to the extracted range.
   How to extract includes an occasion to extract first several pages or one paragraph, an occasion to extract items of contents, an occasion to extract index items and an occasion to extract a preface and a postscript.
(C) Data wherein data for each page of the text data are bit-mapped are made to be abstract data. When such abstract data are outputted, contents of the text can be read, notwithstanding that the abstract data do not contain character codes.
(D) Data prepared by providing new layout by writing an abstract with which an outline of the text can be grasped concerning the text data, by using drawings used in the text data as they are concerning drawings, or using simplified image data, are made to be abstract data. When such abstract data are outputted, an outline of the text data can be grasped.

When restoring text data related to books from abstract data unlawfully, a level of difficultly for restoring operations depends upon a method of modifying or extracting from the text data conducted when preparing the abstract data.

In (A), only the text of text data can be restored, and writing with characters can completely be restored. However, in (A), it is impossible to restore the whole text data because image data cannot be restored.

In (B), the text data can completely be restored as far as the extracted portion is concerned. However, it is impossible to restore the text data on the portion which is not extracted. In (B), when a range to extract from the text data is changed, a restorable amount mentioned above is changed for one text data.

In (C), there is a possibility that character codes can be restored completely by analyzing bit-mapped abstract data with OCR or by inputting them again manually.

In (D), restoration of the text data is impossible, and a the text is not available for a user, although it is impossible to deny the possibility that the description doubled with the text is included in the abstract text written newly.

In the first embodiment, data having high relative difficulty for restoration work are ranked to be those having low copyright protection level, and data having low relative difficulty for restoration work are ranked to be those having high copyright protection level, and thereby, the level of abstract is expressed as a height of the copyright protection level.

With respect to the text data, circumstances vary about which of text data and image data should be protected. It is considered that, in the case of literary works and dictionaries, protection of text data is important in many cases, while, in the case of photographic albums, suits of drawings and atlases, protection of image data is important in many cases.

In the case of (A), the copyright protection level is low for literary works because the text can be restored completely, but the copyright protection level is high for photographic albums, suits drawings and atlases because the image data are not included.

In the case of (B), the copyright protection level is low because the more the extracted amount is, the easier the restoration is, and the copyright protection level is high because the less the extracted amount is, the harder the restoration is.

Further, in the example wherein items of contents, items of index, a preface and a postscript are extracted, the copyright protection level is high because no character code exists on the portion corresponding to the text among written portions 501a and 501b, and restoration is difficult accordingly.

In the case of (C), when pixel density and the number of colors for abstract data converted into bit-map are changed, relative difficulty for restoration is changed. Namely, if abstract data whose pixel density is high are used as a base, the copyright protection level is low because analyses of OCR and restoration of image data are easy, and if pixel density is low on the contrary, the copyright protection level is high. Since the more the number of colors is, the easier the restoration of image data is, the copyright protection level is low, and if the number of colors are less on the contrary, the copyright protection level is high.

In the case of (D), the copyright protection level is changed in accordance with contents of abstract text written newly and with excessive amount of image data quoted from the text data. With regard to the abstract text written newly, the copyright protection level is high. With respect to the excessive amount of image data, the more the image data are, the lower the copyright protection level is, and the less the image data are, the higher the copyright protection level is.

The abstract data can be structured as a part of the text data by a mark-up language, and can also be stored as other data related.

The examples of (A) and (B) are fitted for structuring, and the examples of (C) and (D) are fitted for relating, and when structuring, text data, image data and layout information thereof are main factors of the text data themselves. Therefore, a tag showing an object of abstract data is established, and structuring is made in example (A) so that text data may be designated as abstract data, and structuring is made in example (B) so that first several pages or first one paragraph of the text data may be designated as abstract data.

When storing abstract data as related other data, abstract data and text data are stored respectively as a file to have a comparison table describing relating, and relating between the text data and bit-mapped data is described in the example of (C), and relating between the text data and newly written abstract data is described in the example of (D).

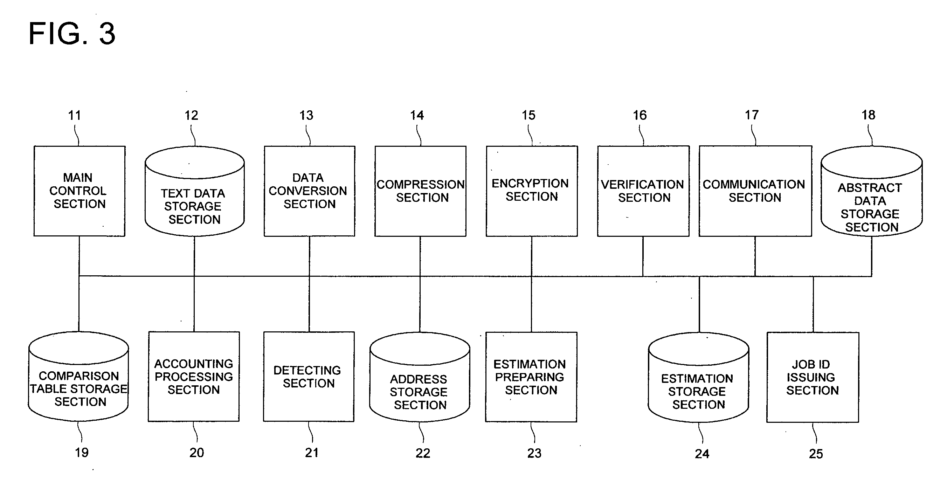

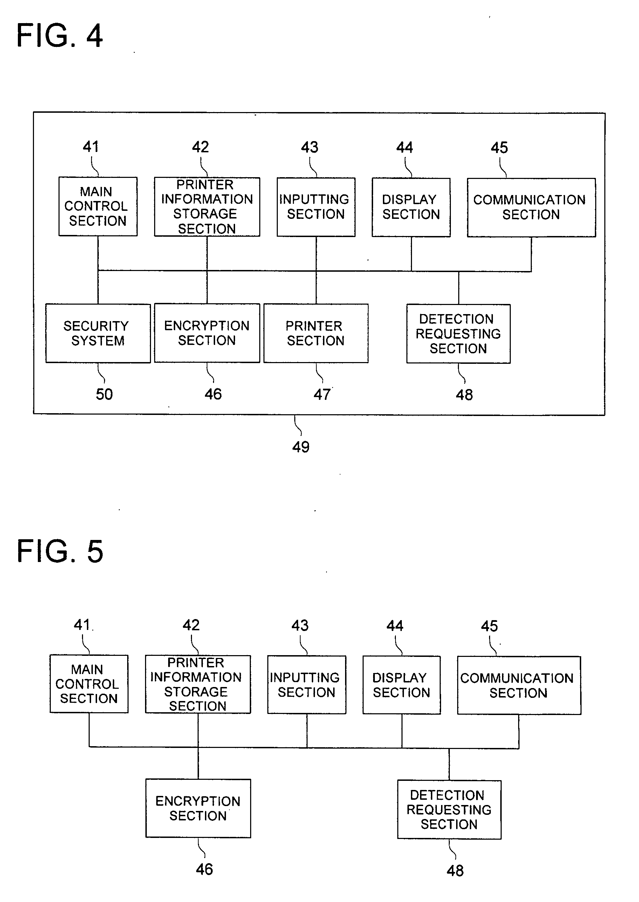

Next, the structure of each of service side server 100 and printer client 200 will be explained as follows, referring to Figs. 3 - 5. Incidentally, Fig. 3 is a block diagram illustrating the detailed structure of the service side server 100, and Fig. 4 and Fig. 5 represent a block diagram illustrating the detailed structure of the printer client 200.

In Fig. 3, service side server 100 has therein main control section 11, text data storing section 12, data converting section 13, compression section 14, cryptogram processing section 15, collating section 16, communication section 17, abstract data storage section 18, comparison table storage section 19, accounting processing section 20, detection section 21, address storage section 22, estimate preparing section 23, estimate storage section 24 and job ID issuing section 25, and these sections are connected to each other through an internal bus.

The main control section 11 is composed of a central processing unit (CPU), a main storage device and an auxiliary storage device, and each of the service side server 100 and the whole thereof are controlled based on the program recorded in the auxiliary storage device.

The text data storing section 12 is provided with a large capacity hard disc which stores the text data. The text data are grouped as one copy of book, and data which can be outputted are made to be one file. The main control section 11 controls the aforesaid large capacity hard disc with an optional file system, and can read and write the file stated above related to optional text data by designating, for example, path and a file name. As a storage medium equipped on text data storage section 12, optional storage media such as an optical disc and a photo-electro-magnetic disc can be used in addition to a hard disc.

The data converting section 13 converts the stored text data into printable data for printing, in accordance with printing specifications required by the printer client 200 and with hardware-like performance of the printer client 200. The hardware-like performance and printing specifications include resolution of printing, a font type, finishing processing such as such as center-folding and stapling, printer description language capable of being interpreted, paper handling and image memory capacity.

Further, when the printer client 200 is not provided with printer section 47 (described later), conversion is made to image data for display.

The compression section 14 compresses data for printing to the size suitable for communication through a compression processing method capable of extending with the printer client 200. Any method can be used as the compression processing method. The service side server 100 makes a plurality of compression processing methods to be possible, and communication between various printer clients 200 and compressed data for printing is possible.

Cryptogram processing section 15 is an example of an encryption means of the invention, and it conducts encryption and decrypting based on a public key system, as described later. The cryptogram processing section 15 adds digital signature encrypted by its own secret key to data emitted by service side server 100 and emits them by providing encryption by a public key of a transmission target. The cryptogram processing section 15 decrypts digital signature of the received data by a public key of a sending source and thereby specifies a sending source, and when it receives data encrypted by its own public key, it decrypts by its own secret key. Encryption of the text data and that of abstract data are conducted after conversion processing at data conversion section 13 and compression processing at compression section 14 are conducted.

When login is requested by printer client 200, collating section 16 judges lawfulness of either of or both of the printer client 200 and a user who operates the printer client 200. In the case of lawfulness, the printer client 200 can continue procedures of the flowchart described later, but in the case of unlawfulness, the printer client 200 is prohibited to continue procedures of the flowchart described later. Further, if there is requested login again from the printer client 200, lawfulness is judged again newly, and if its result is lawful, the printer client 200 can conduct the procedures which will be explained later.

Further, collating section 16 checks copyright protection level of the printer client 200.

The communication section 17 conducts communication between service side server 100 and printer client 200 through the internet INet by the known protocol.

Abstract data storage section 18 is an example of a storage means of the invention which is provided with a large capacity hard disc, and stores abstract data. The abstract data are made to be a file. Main control section 11 controls the aforesaid large capacity hard disc with an optional file system, and can read and write the aforesaid file related to optional abstract data by designating, for example, path and a file name. As a storage medium equipped on abstract data storage section 18, it is possible to use optional storage media such as an optical disc and photo-electro-magnetic disc without being limited to the hard disc. Further, abstract data storage section 18 and text data storing section 12 can also be structured physically on the same hard disc.

Comparison table storage section 19 stores a table (hereinafter referred to as copyright protection level comparison table) that shows, in accordance with copyright protection level of printer client 200 checked by collating section 16, the correspondence of copyright protection level of abstract data transmittable to the printer client 200.

Accounting processing section 20 conducts accounting processing, in accordance with the results of printing transmitted from printer client 200, for the printer client 200 or for a user who operates the printer client 200.

The detection section 21 can detect, in accordance with detecting conditions of a searching request, transmitted from printer client 200, the text data stored in text data storing section 12 and abstract data stored in abstract data storage section 18. As the detecting conditions, a name of a book, a name of a writer (a name of an author), a name of a publishing company and Japan Decimal Classification (NDC) can be designated, and a list is transmitted to printer client 200 so that corresponding book names, writers names (authors names) and publishing companies names may be listed up on the comparison list for each text data. The printer client 200 can specify the abstract data to be downloaded, based on the list which the printer client 200 obtained. It can also specify the corresponding text data resulted from the detection by conducting free key word detection for the writing section of the text data in response to a searching request from the printer client 200, and it can specify the abstract data corresponding to the foregoing.

The address storage section 22 stores the comparison table code transmitted by printer client 200 and data storage position information for text data specified by the requested book code. In the first embodiment, information of data storage position represents data wherein a host name of data server 10 storing each text data or an IP address and path and a file name of text data stored in the data server 10 are combined, and when the text data include a plurality of pages, a page number that designates optional page is included.

Estimate preparing section 23 calculates an amount of money (hereinafter referred to as an estimated cost) to be charged to a user operating printer client 200 based on the number of prints relating to printing specifications established by printer client 200 and on the specified text data, and generates estimate data that indicates clearly the estimated cost. On the display section 44 of the printer client 200 which has received the estimate data, there is indicated the estimated cost. The estimate preparing section 23 provides estimate ID which is specific to each estimate data generated. The estimate preparing section 23 establishes the term of validity of the prepared estimate data, and the main control section 11 makes the estimate storage section 24 to store estimate data for the term of validity established by the estimate preparing section 23.

Estimate storage section 24 stores the estimate data prepared by the estimate preparing section 23 for the term of validity. The main control section 11 can eliminate or change the estimate data stored in the estimate storage section 24 in accordance with requirement from printer client 200 for eliminating or changing estimate data within the term of validity.

Job ID issuing section 25 issues specific job ID for each print job relating to the order from printer client 200 who has approved the estimated cost. The print job means a series of operations covering from communication of text data related to specified text data to accounting processing, and each of communication, printing, communication of result of printing and accounting processing for text data conducted on each of or between service side server 100 related to the job whose order is generated and printer client, is assigned to either one of the print jobs. Since each of communication, printing, communication of result of printing and accounting processing for text data can be specified by the provided job ID, any of diversified requirement types and processing types by a large number of printer clients 200 and users can be specified in terms of a user or printer client 200 that has made the requirement.

The data converting section 13, compression section 14, cryptogram processing section 15, collating section 16, accounting processing section 20, estimate preparing section 23, and job ID issuing section 25 can take the structure of software executed by the main control section 11, without being limited to the structure of hardware.

The data converting section 13 can also be of the structure to be equipped on printer client 200.

Selection of abstract data to be transmitted to printer client 200 is conducted by the main control section 11. Namely, the main control section 11 is an example of a specific means of the invention and it further is an example of a selection means.

Fig. 4 is a block diagram illustrating the detailed structure of printer client 200.

In Fig. 4, the printer client 200 has therein main control section 41, printer information storage section 42, inputting section 43, display section 44, communication section 45, cryptogram processing section 46, printer section 47, detection requesting section 48 and security section 50, and these sections are connected to each other through an internal bus.

The main control section 41 is composed of a central processing unit (CPU), a main storage unit and an auxiliary storage unit, and it controls each part and the whole of the printer client 200, based on control program recorded on the auxiliary storage unit.

The printer information storage section 42 stores a code showing copyright protection level of the printer client 200. The copyright protection level of the printer client 200 is stored in the printer information storage section 42 in advance because it is determined by protection cover 49 that is described later and by security system 50.

Further, the printer information storage section 42 stores information related to hardware-like performance of printer section 47. The hardware-like performance of the printer section 47 includes resolution of printing, a font type, finishing processing such as center-folding and stapling, printer description language capable of being interpreted, paper handling and image memory capacity. When the printer client 200 is provided with a finishing processing unit such as a finisher and a stapler, the printer information storage section 42 equally stores information related to performance of the finishing processing unit.

The inputting section is provided with operation keys for conducting various operations, which makes it possible for a user to request specifications for printing and login and to place an order or to request printing.

The specifications for printing represent options which can be selected by a user operating printer client 200 and they are specifications designated by the user. Examples thereof include selection of monochromatic printing and color printing (selection of the number of colors in color printing), options relating to grade of printing including selection of resolution, selection of two-sided printing and single-sided printing, selection of a cover and a back cover, existence of center-folding or center-binding, page layout (layout of text data in printing of plural pages of the text data on one page of the printed matter thus printed), option related to book-binding such as existence of pasted book and option relating to a range of printing whether to output all pages of book data or to output designated pages.

The request for login represents prescribed procedures to acquire the certification for access to service side server 100, and a user operates the request for login on the inputting section 43, and inputs a prescribed user name and password continuously. Even for the order and the request for printing, prescribed operations are conducted on the inputting section 43 equally.

The display section 44 is an example of an image display means of the invention, and it is a display means that displays various pieces of information, downloaded text data and abstract data and, for example, it is composed of CRT and a liquid crystal panel to display the results of the input conducted by a user by means of 4-c and the selectable options. These inputting section 43 and display section 44 may also be structured integrally on a touch panel.

Further, the display section 44 converts text data and abstract data decrypted by encryption section 46 (described later) into the data form that is suitable for display on the display section. When the text data and the abstract data are composed of plural pages, a user can operate the inputting section 43 to conduct an operation such as scrolling.

The communication section 45 conducts, by means of a known protocol, communication between printer client 200 and service side server 100 through the internet INet.

The cryptogram processing section 46 is an example of a decrypting means of the invention, and it conducts encrypting and decrypting in the public key system as will be described later. With regard to data submitted by printer client 200, the cryptogram processing section 46 adds a digital signature encrypted by its own secret key, and submits it after encrypting it with a public key of the source of transmission. In addition, the cryptogram processing section 46 specifies the source of transmission by decrypting, by the use of the public key of the source of transmission, the digital signature of the data received, and decrypts with its own secret key after receiving the data encrypted by its own public key.

Without being limited to the hardware structure, the cryptogram processing section 46 may also be of the structure for executing encryption of text data to be printed in printer section 47 as a software executed by main control section 41, and executing preparation of a digital signature to be added to the data transmitted through communication section 45.

The printer section 47 is an example of an image forming means of the invention, and it conducts printing on a recording material in succession based on the text data encrypted in the cryptogram processing section 46. It can employ an image forming means of any type such as an electrophotographic type, an ink jet type or a silver halide photographic type, provided that the image forming means is one wherein an image is formed based on digital data.

Further, any of display section 44 and printer section 47 is an example of an output means of the invention.

The detection requesting section 48 is one to request the detection for detection section 21 of service side server 100, and as detection conditions capable of being processed by the detection section 21, a name of a book, a name of a writer (a name of an author), a name of a publishing company and Japan Decimal Classification (NDC) are designated for requesting the detection.

The protection cover 49 is an example of a protection means of the invention, and it is a means to cover a path (a data transmission path) through which the text data and abstract data are actually transmitted as electric signals, and an example of the protection means includes main control section 41 equipped on printer client 200, printer information storage section 42, display section 44, communication section 45, cryptogram processing section 46, printer section 47, detection requesting section 48, security system 50 (described later), a terminal equipped on an element constituting internal bus, a lead wire, and an exposed pattern portion. The protection cover 49 prevents physical access by a user including an action to connect a certain circuit to the aforesaid data transmission path. An example of the protection cover 49 includes a cover made of a sheet material or the data transmission path sealed with resin.

The security system 50 is an example of a protection means of the invention, and it conducts function regulation of the control program executed by the main control section 41 provided in printer client 200. For example, the control program functions as a filter that regulates so that anything cannot be selected excepting display section 44 and printer section 47, as a target to which the downloaded text data and abstract data are outputted.

The security system 50 further functions as a filter that regulates to prohibit rewriting of the code showing copyright protection level stored in printer information storage section 42.

In the case of the structure wherein printer client 200 writes the downloaded text data and abstract data in a temporary folder such as a built-in hard disc, as temporary storage, security system 50 places a limitation on access to the temporary folder. With respect to access through the network and access in user powers, for example, such limitation of access functions as a filter that prohibits reading, and gives powers of reading the temporary folder to the access within a system power of printer client 200 itself alone.

Among printer clients 200 shown in Fig. 1, printer client 200a corresponds to the printer client 200 explained in Fig. 4. The printer client 200 explained in Fig. 4 from which protection cover 49 and security system 50 are eliminated corresponds to printer client 200d shown in Fig. 1.

Namely, the printer client 200a is a device structured as an exclusive hardware to be used as printer client 200, and the printer client 200d, on the other hand, is a general-purpose personal computer to which a key board representing inputting section 43, a monitor representing display section 44 and a modem or a network interface representing communication section 45 are connected. To a main base board representing main control section 41, there are connected CPU, RAM (main storage device) and a hard disc (auxiliary storage device), and further, an ink jet printer or a laser printer representing printer section 47. Printer information storage section 42 is structured with the hard disc, while, cryptogram processing section 46 and detection requesting section 48 are structured with software. Since structuring with a software to operate encrypted communication and detection system in the client server structure is known, the detailed explanation thereof will be omitted.

Fig. 5 is a block diagram illustrating the detailed structure of printer client 200.

In Fig. 5, printer client 200 has therein main control section 41, printer information storage section 42, inputting section 43, display section 44, communication section 45, cryptogram processing section 46 and detection requesting section 48, and these sections are connected to each other through an internal bus. The printer client 200 is not equipped with printer section 47, which is different from the printer client 200 shown in Fig. 4.

Since the main control section 41, printer information storage section 42, inputting section 43, display section 44, communication section 45, cryptogram processing section 46 and detection requesting section 48 all provided on the printer client 200 are the same as those explained in Fig. 4, the detailed explanation thereof will be omitted.

With respect to the printer client 200 of the structure stated above, when outputting text data and abstract data, it is possible to display them on display section 44 but it is impossible to print them.

Therefore, a user uses printer client 200 for a use of confirming the displayed abstract data, and uses printer client 200 for the purpose of printing.

Among printer clients 200 shown in Fig. 1, printer client 200b and printer client 200c correspond to the printer client 200 explained in Fig. 5.

Namely, the printer client 200b is a device structured as an exclusive hardware to be used as printer client 200, and the printer client 200c, on the other hand, is a general-purpose personal computer to which a key board representing inputting section 43, a monitor representing display section 44 and a modem or a network interface representing communication section 45 are connected. To a main base board representing main control section 41, there are connected CPU, RAM (main storage device) and a hard disc (auxiliary storage device). Printer information storage section 42 is structured with the hard disc, while, cryptogram processing section 46 and detection requesting section 48 are structured with software. Since structuring with a software to operate encrypted communication and detection system in the client server structure is known, the detailed explanation thereof will be omitted.

Under the condition of transmission through the internet INet, text data and abstract data are protected by an encryption technology, and therefore, they are not influenced by the copyright protection level of printer client 200. What is affected by the copyright protection level of printer client 200 is the protection of text data and abstract data which have been downloaded to printer client 200.

The copyright protection level of printer client 200 is determined by structures of protection cover 49 and security system 50. For example, in the case of an exclusive hardware such as printer clients 200a and 200b, a high level of copyright protection is secured by protection cover 49 and security system 50, however, when a general-purpose personal computer such as printer clients 200c and 200d is used, there sometimes is a case where both of the protection cover 49 and security system 50, or one of them cannot be used, and even when both of them can be used, there sometimes is a case where the copyright protection level which is as high as that secured by an exclusive hardware cannot be secured.

For example, printer client 200a is structured as an exclusive hardware, and a port for input and output provided on the hardware is only for inputting section 43, display section 44, communication section 45 and printer section 47, and security system 50 regulates so that sections other than the display section 44 and the printer section 47 may not be designated as a target for output of text data and abstract data. Since the protection cover 49 is further provided, the highest copyright protection level can be secured.

Further, printer client 200b is structured as an exclusive hardware, and a port for input and output provided on the hardware is only for inputting section 43, display section 44 and communication section 45, and security system 50 regulates so that sections other than the display section 44 may not be designated as a target for output of text data and abstract data. Since the protection cover 49 is further provided, the highest copyright protection level can be secured, in the same way as in the printer client 200a.

Printer client 200c is a general-purpose personal computer provided with protection cover 49 and security system 50.

The protection cover 49 of the printer client 200c is a cover which restricts a use of a general-purpose connector equipped on the personal computer, and it obstructs physically connection of peripheral equipment to USB port or a serial port.

The security system 50 of the printer client 200c regulates writing of downloaded text data or abstract data on removable media, and regulates file transmission on the network and file sharing as well as data conversion into another data type.

However, a screen can be captured because a general-purpose personal computer is used, and it is possible to suck out text data and abstract data under the condition that the hard disc is removed and security system 50 does not operate, thereby, the copyright protection level is medium.

Printer client 200d is of the structure wherein a printer is connected to a general-purpose computer, and protection cover 49 and security system 50 are omitted.

Since the text data and abstract data downloaded by printer client 200d can be simply duplicated, the copyright protection level is low.

In the printing system in the first embodiment, the copyright protection level comparison table is consulted to transmit abstract data having a level corresponding to the copyright protection level of printer client 200.

Table 1 is an example of the copyright protection level comparison table stored in comparison table storage section 19.

**Table 1**

| | Original data | Data of text only/image only | Bit-mapped data |
|---|---|---|---|
| Abstract data written newly | 2 | 2 | 1 |
| Extracted data | 3 | 3 | 2 |
| Full text data | 5 | 4 | 4 |

In Table 1, data types are represented by the axis of abscissas, and levels of extraction are represented by the axis of ordinates.

Original data on the axis of abscissas represent data under the condition wherein any processing has not been conducted at all.

The text only/image only means (A) abstract data representing text data only wherein image data and layout information are eliminated from the text data, and abstract data wherein text data and layout information are eliminated from the text data which is opposite to abstract data (A).

Bit-mapped data represent abstract data wherein data of each page of the text data (C) are bit-mapped.

In the axis of abscissas, the abstract written newly means abstract data prepared by writing newly the abstract text with which the outline of the text can be grasped concerning the text data (D), and by using drawings used in the text data regarding drawings as they are, or by using simplified image data, and by providing new layout.

Extraction means those extracted from the text data (B) and prepared as abstract data. When restoring unlawfully the text data relating to the book from the abstract data, relative difficulty of restoring operations varies depending on an alteration from the text data and a method of extraction which are executed when preparing the abstract data.

In a word, when paying attention to data types of the abstract data (the axis of abscissas in Table 1), relative difficulty of an operation of restoring from bit-mapped data is the highest. Then, with respect to operations of restoring from the abstract data of text only or image only, the relative difficulty is slightly lower than that of operations of restoring from bit-mapped data, because it is possible to restore a duplicate of the book concerning either one of text or image. Further, for the restoration from original data, the relative difficulty is lowest, because restoration operations are not necessary.

Further, when paying attention to the extent of extraction of the abstract data (the axis of ordinates in Table 1), the relative difficulty of operations of restoring from text data relating to the book from the abstract written newly is the highest. Then, the relative difficulty of the restoration operation from the abstract data extracted from the text data is the second highest. Further, the relative difficulty for the full text is the lowest, because no restoration operation is needed.

Since the abstract data agrees with either one of three conditions of the axis of ordinates, and agrees with either one of three conditions of the axis of abscissas, it is possible to allot to either one of nine columns in Table 1.

A numerical value of each column shows the copyright protection level of printer client 200. Namely, in the printing system in the first embodiment, the level of copyright protection of printer client 200 is divided into five ranks for evaluation, and printer information storage section 42 of printer client 200 stores a numerical code of either one of 1 - 5 as the corresponding code.

For example, if two are illustrated, transmission of extracted data with text only is permitted to printer client 200 whose copyright protection level is not less than 3, and it is not permitted to printer client 200 whose copyright protection level is less than 3.

Transmission of bit-mapped and full text abstract data is permitted to printer client 200 whose copyright protection level is not less than 4, and it is not permitted to printer client 200 whose copyright protection level is less than 4.

When a code (same as the numerical value code) showing the copyright protection level is sent from printer client 200 to service side server 100, the service side server 100 refers to the copyright protection level comparison table, and permits transmission to printer client 200 for the abstract data having the copyright protection level that is not more than the numerical value code, and prohibits transmission of the abstract data having the copyright protection level exceeding the numerical value code.

For example, when a numerical value code is 5 for printer clients 200a and 200b, a numerical value code is 3 for printer clients 200c and a numerical value code is 1 for printer clients 200d, transmission of abstract data composed of original data of the abstract written newly only is allowed for the printer clients 200d. Then, for the printer client 200c, transmission of abstract data composed of original data of the abstract written newly, transmission of abstract data composed of original data of the extracted abstract, transmission of abstract data composed of only text or only image of the extracted abstract, and transmission of abstract data wherein extracted abstract is bit-mapped, are allowed, in addition to those allowed for the printer client 200d. Further, for the printer clients 200a and 200b, transmission of full original text data (not abstract data but full text data), transmission of full text of abstract data for text only or image only, and transmission of full text data of bit-mapped abstract data are allowed.

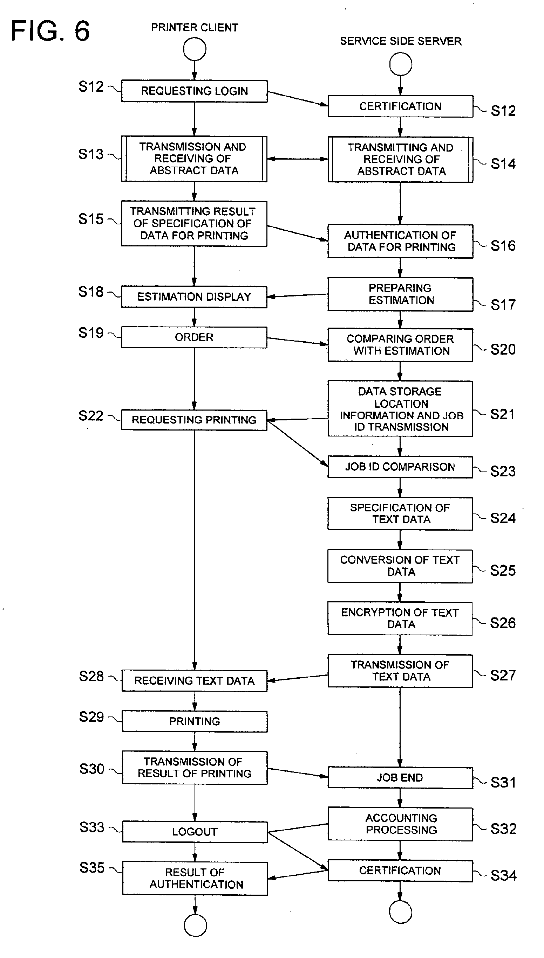

Next, an outline of operations of the printing system of the first embodiment will be explained as follows, referring to the flow chart in Fig. 6. Incidentally, details of transmitting and receiving of the abstract data will be explained later.

A user who desires printing of text data operates printer client 200, and issues login request to service side server 100 (S11). Theoretical communication channel between service side server 100 and printer client 200 is secured by the login.

Upon receiving the login request, the service side server 100 checks legality of the login request, and if it is lawful, the printer client 200 is authenticated (S12), and the following procedures can be executed by the printer client 200. The service side server 100 judges a user registered in the service side server 100 as a user of the printing system or the login request from the printer client to be lawful. The results of the authentication are notified to the printer client 200.

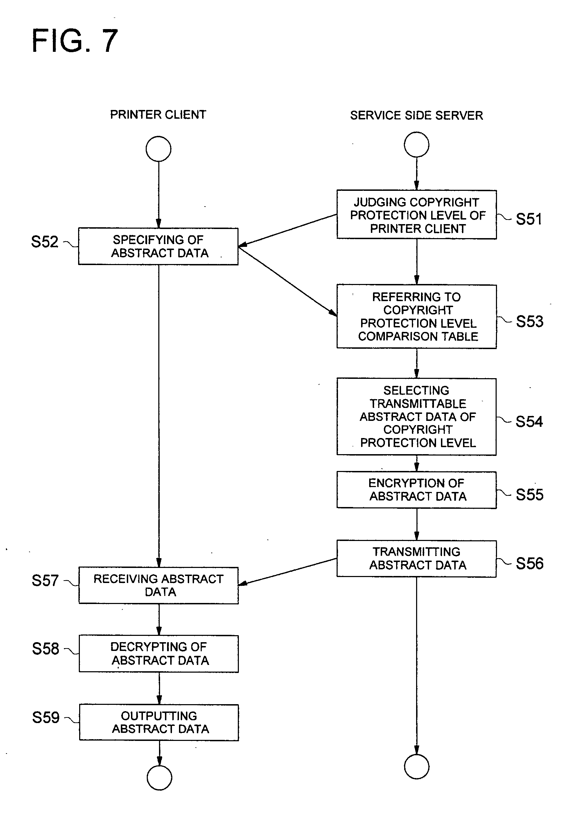

After authentication in step 12 ends, the service side server 100 and the printer client 200 execute procedures for transmitting and receiving of abstract data (S13 and S14). The procedures for transmitting and receiving of abstract data will be described later, referring to the flow chart shown in Fig. 7.

In the printer client 200, abstract data received are outputted (printed or displayed), and when a user judges them through visual check to be the desired text data, the text data corresponding to the abstract data are specified as the data to be printed, and the results of the specifying are transmitted (S15).

Upon receiving the results of the specifying, the service side server 100 specifies data to be printed from text data stored in text data storage section 12 (S16), then, prepares estimation data presenting a charge for the printing that is claimed from the service side server 100 to a user (S17), and sends to printer client 200. The service side server 100 keeps the estimation data which has been sent.

The printer client 200 displays on display section 44 based on the received estimation data (S18).

The estimation data include an original code related to the specified text data, a name of the book, an estimated amount of money, a term of validity for the estimate, a name of the user who operates the printer client 200 and a name (a full name or a corporation name) and where to contact for a person to whom the charge is claimed. Peculiar estimation ID code is included in each estimation data, and each item can be indicated or printed by printer client 200.

A user who operates the printer client 200 confirms contents indicated on display section 44 based on estimation data, and places an order if it can approve (S19). After an order is placed, order data are sent to service side server 100 from the printer client 200. The order data include an estimation ID code and a code showing the request of the order.

Upon receiving the order data, the service side server 100 compares an estimation ID code included in the order data with estimation ID code of estimation data kept (S20), and further confirms whether the order is based on the estimation data within the term of validity or not. Then, if the order is confirmed to be one that is placed by a lawful user based on the estimation within the term of validity, data storage position information and job ID are sent to the printer client 200 (S21).

Job ID is given by service side server 100 as a peculiar value for discriminating a print job whose estimated amount of money is approved by a user. In particular, when service side server 100 is divided into plural server computers, and text data storage section 12 and comparing section 16 are executed by different server computers, the server computer equipped with text data storage section 12 receives job ID from the comparing section 16, then, receives job ID from printer client 200 to conduct comparison, and can evaluate legality of the printer client 200.

Data storage position information represents a value with which the printer client 200 specifies text data stored in service side server 100. For example, if the service side server 100 controls and uses each text data as a file in a file system that supports a directory structure, the text data can be specified by the name of the host that specifies service side server 100 from many nodes existing on the internet, IP address and by the path to the file corresponding to the text data. In the first embodiment, therefore, codes based on IP address and a path are generated and are made to be data storage position information.

Upon receiving data storage position information and job ID, the printer client 200 accesses service side server 100 based on the data storage position information, and requests printing (S22). Further, the printing specifications stated above are sent almost simultaneously with the request for printing.

When printing is requested from printer client 200, the service side server 100 conducts collation of job ID (S23). The collation in the step 23 is one to check whether the following job ID (1) and job ID (2) agree with each other or not.
(1) Job ID which is issued by service side server 100 and is sent to printer client 200, and then, is kept in the service side server 100.
(2) Job ID received by service side server 100 together with request for printing from printer client 200.

Incidentally, the job ID once issued is locked so that it may not be erased or changed before a termination, and the locking is released in the step described later.

If the collation by the service side server 100 shows that (1) and (2) agree with each other as the result of the collation in step 23, reliance is placed on that the order in step 19 has been placed after the agreement with the estimate amount of money shown in step 18.

When (1) and (2) agree with each other, the service side server 100 specifies the text data to be kept in text data storage section 12 (S24), and conducts conversion (S25) of the text data in accordance with printing specifications and printer capacity and encryption (S26) of the text data.

When the conversion and the encryption of the text data are completed, the service side server 100 sends these to printer client 200 (S27), and the printer client 200 receives the text data (S28).

The printer client 200 decrypts the encrypted text data, then, conducts printing (S29) and sends the result of the printing to the service side server 100 (S30) after the printing is completed. The result of the printing is notification about whether the printing from the printer client 200 to the service side server 100 was successful or not. When troubles such as poor sheet feeding are caused in printing, the printer client 200 submits the result of printing showing the status of printing failure, and when no troubles are caused, the printer client 200 submits the result of printing showing the status of successful printing.

After receiving the result of printing, the service side server 100 finishes the print job specified with the job ID mentioned above (S31).

If the job is successfully finished, the service side server 100 conducts accounting, based on the aforesaid job ID, for the printer client 200 that is to be charged (S32), and completes the print job.

A user operates printer client 200 to send logout request to service side server 100 (S33), and the service side server 100 authenticates after receiving the logout request (S34), and the result of the authentication is notified to the printer client 200 (S35). Communication channel secured between the service side server 100 and the printer client 200 is cut by the logout.

In the first embodiment, even if a request for printing is made again by job ID relating to the print job which has been completed once successfully, this request is ignored by both the service side server 100 and the printer client 200.

Since the service side server 100 can judge whether printing was successful or not, from the result of the printing when conducting accounting in step 32, it is possible to determine the conditions for accounting, including, for example, accounting by making a reduction for the amount of money presented by the estimation data, or accounting no charge independently of the presented amount of money. With regard to the conditions for accounting in the case of failed printing, it is preferable to show clearly to a user by displaying on display section 44 of printer client 200 together with the amount presented by estimation data. Further, with respect to the successful print job, it is possible to establish the conditions of accounting so that an amount of money presented by the estimation data may be charged.

Next, further details of transmitting and receiving of abstract data executed by the printing system in the first embodiment will be explained as follows, referring to the flow chart in Fig. 7.

In the case of authentication in step 12 of Fig. 6, service side server 100 confirms a copyright protection level of printer client 200. Namely, since the printer client 200 makes a login request and sends to the service side server 100 a code showing the copyright protection level stored in printer information storage section 42, the service side server 100 judges the copyright protection level of the printer client 200 based on the code (S51).

Being authenticated, the printer client 200 specifies abstract data to be downloaded and sends the result of the specifying to the service side server 100 (S52). Each abstract data is given peculiar ID code (hereinafter referred to as an abstract code) for each case, and when the abstract data are specified by the user side the abstract code is used for specifying. With respect to the abstract code, it may either be preserved in the printer client 200, or a user may refer to the printed matter, or abstract code provided on the service side server 100 may be procured.

For example, when the abstract code is procured from the service side server 100, the service side server 100 sends a comparison list between request data and abstract code to the printer client 200. The comparison list may be either one wherein all abstract data stored in abstract data storage section 18 can be looked through or the result of detection based on the detection conditions designated by the printer client 200 side.

After receiving the result of specifying abstract data, the service side server 100 refers to the code showing the copyright protection level procured in step 51 and to copyright protection level comparison table (S53), and selects abstract data of copyright protection level sendable to the printer client 200 side (S54).

Further, the service side server 100 conducts encryption processing on the selected abstract data (S55), and sends them to the printer client 200 (S56).

In the printer client 200, when the abstract data are received (S57), they are decrypted (S58) and abstract data are outputted (printed or displayed) (S59).

It becomes possible for a user to check the results of output visually and to judge whether they are the desired text data or not.

In the first embodiment, a series of processing relating to transmitting and receiving of abstract data are executed in step 13 and step 14. It is possible to employ any structure provided that a series of processing relating to the abstract data of this kind are conducted in the step within a range from the authentication of the printer client 200 in step 12 to the step where an order is issued by the printer client 200 in step 19 in the structure. Namely, the structure wherein abstract data are outputted after printing comparison data are specified in step 15 can be employed, or the structure wherein abstract data are outputted after estimation data are displayed in step 18 can be employed.

Next, encryption executed in each step will be explained.

### (Encryption 1)

When a request for printing is sent from printer client 200 to service side server 100 in step 22, for example, information about printing specifications (hereinafter referred to as printing specification information) are transmitted by the use of a public key encryption method. Therefore, they are encrypted as follows, and are transmitted after the digital signature is added.

To be concrete, information concerning the following printing specifications included in printing specification information is encrypted by a public key of the service side server 100, and characteristic values of information relating to the printing specifications are encrypted (digital signature) by a secret key of the printer client 200, to be transmitted.

Information relating to printing specifications includes random data, sending date and/or time, a type of a request, a name of a requesting source, estimation ID, a list of printer names for printing, a'main code (described earlier), a starting page, an ending page, printing conditions (the number of colors, a type of character font, a sheet size, a page layout and a book binding method), a list of signers, and digital signatures 1 ... n.

These characteristic values relating to printing specifications are as follows.

Random data are random ones from 8 bytes to 64 bytes, and they are generated on the printer side. The random data are added so that contents of request which are alike each other may be quite different after being encrypted. They are usually fixed in terms of length.

The sending date is a date on which printing specification information is sent, and sending time is the time at which printing specification information is sent, and they are used to clarify the date and time for generation of the request, and to control legality of accounting and passage of processing time, and they are also used to change contents of the code of cryptogram for contents of the request and thereby to make the decoding to be difficult, together with the aforesaid random data.

The type of request is classification of the request including request of abstract data, request of text data, request of estimate (which will be described later) and others.

A name of a requesting source is a peculiar name of printer client 200 (a host name of TCP/IP), and it specifies the requesting source and is used for detecting a public key of the other party for decrypting a digital signature which will be described later. It further specifies the target to which the text data are sent from service side server 100. It is also used for specifying the other party to which the service side server 100 conducts accounting.

Generating request ID is the so-called demand number, and it is generated sequentially on the printer side to simplify discrimination for specifying, when receiving the text data, the request for that data.

The book code is an ID code of a book for specifying the book corresponding to the text data to be requested, and a starting page is a necessary first page, and a finishing page is a necessary last page. With respect to the starting page and the finishing page, a plurality of them can be provided in case of need, and thus, a plurality of portions included in the text data of one case can be specified.

Regarding the number of colors included in printing conditions, even in the case of a color book, it can be transmitted as monochromatic information, which makes it possible to realize cost reduction by decrease of communication capacity. A type of character font is information to limit fonts to be used. A sheet size is information to limit sheet sizes to be used. Page layout means information to put plural pages in a sheet of paper. A method of book binding means information for designating data position corresponding to the method of book binding.

A list of signers is a list including signers for digital signatures, and it is used for detecting a public key of the other party.

The digital signature is a code wherein a characteristic value of the printing specification information is encrypted by a secret key of a sending source. An addressee (service side server 100) decrypts this portion with a public key of the other party (printer client 200), and confirms whether the decrypted value agrees with the characteristic value of the aforesaid request data or not. Due to this, a transmitter can confirm that its target is surely lawful (nobody is successful impersonation) and can further confirm that contents of the request have not been altered. For calculation of the characteristic value, MD5 and a hash value in another method are used.

As concrete contents of digital signatures, there can be used, for example, random data (random value of not less than 8-byte), date and/or time and a structure wherein characteristic values of printing specification information are encrypted by a secret key of a signer (usually, printer client 200).

According to circumstances, a signature may be made by a signer who is different from the requesting source. For example, when requesting to the system for the first time, the specific signer who is trusted already by service side server 100 signs to register printer client 200 newly.

Further, it is possible to increase probability of a proof of validity of the signature by confirming that the date and time are after the generating time for the aforesaid text request data and are within a prescribed period of time.

Further, in the example wherein printer client 200 is composed of a printer group that is equipped with a plurality of printers, it is preferable that a list of printer names for printing is included in printing specification information.

The list of printer names for printing is designated when printing with plural printers in the printer group on a division system, and it is possible for service side server 100 to prepare data (key for encryption and designation of target for sending) corresponding to each printer, and to send them. Owing to this, it is possible to make a large quantity of prints at high speed while protecting the text data. On the printer side, in this case, it is possible to conduct digital signature by circulating the request in the local printer group in succession. It is also possible for the group master (one printer selected from plural printers in the printer group) to carry out digital signatures collectively without circulating.

In addition, when sending data by dividing into plural printers, digital signature of each printer can be added. Further, random data and the date are used for the purpose of preventing generation of a specific cryptogram code, in the same way as in the case of encryption of request data.

Service side server 100 decrypts, with its secret key, the printing specification information which is encrypted and is given digital signature, and confirms the other party (printer client 200) by decrypting digital signature (decrypting of characteristic values).

### (Encryption 2)

When abstract data and text data are transmitted by service side server 100 in steps 13, 14 and 27, for example, a public key encryption method is used to transmit abstract data of communication form (hereinafter referred to as communication form abstract data), and text data of communication form (hereinafter referred to as communication form text data). This is transmitted after being encrypted and given digital signature as follows.

To be concrete, the following pieces of information included in communication form abstract data and communication form text data are encrypted by a public key of printer client 200, and their characteristic values are encrypted (digital signature) by a secret key of service side server 100, to be transmitted.

In this case, information included in the communication form text data can include random data, date and/or time of transmission, data types (types of text data and estimation data), data ID (book code, estimation ID), a name of requesting source, generation requesting ID, a list of printer names for printing, a starting page, a finishing page, a charge, a list of signers, a main body of text data, and digital signatures 1 ... n.

The service side server 100 conducts digital signature with characteristic values of information included in the communication form text data mentioned above. This signature may also be a signature of service side server 100 if it is a digital signature of the service side server 100.

Printer client 200 decrypts, with its own secret key, the communication form text data received by the printer client 200, and confirms digital signature and legality of agreed time of demanding ID, for printing.

### (Encryption 3)

When results of printing are transmitted to service side server 100 in step 30, for example, a public key encryption method is used to transmit information of the results of printing. This is transmitted after being encrypted and given digital signature as follows.

To be concrete, the following pieces of information included in information of the results of printing are encrypted by a public key of service side server 100, and their characteristic values are encrypted (digital signature) by a secret key of printer client 200 to be transmitted.

In this case, information included in information of the results of printing can include random data, date and/or time of transmission, text data ID, ID of text data transmission, a name of requesting source, generation requesting ID, a list of printer names for printing, the number of prints to be made by each printer, normal quantity of prints, a list of signers, and digital signatures l ... n.

Printer client 200 can conduct digital signature with characteristic values of information included in the information of the results of printing.

When a plurality of printers are used for printing, each printer conducts digital signature, or the results of printing are controlled collectively by a group master, and signatures can be conducted collectively.

Service side server 100 decrypts, with its own secret key, printing result information received by the service side server 100, and confirms time, requesting source, requesting ID and text ID in the same way, and the service side server 100 conducts accounting based on the results of printing.

Access and communication relating to specific steps between printer client 200 and service side server 100 have been explained above, and in addition to the foregoing, encryption and digital signatures can be given to communication between service side server 100 and printer client 200, at all steps.

In the first embodiment explained above, there has been explained a network structure wherein service side server 100 and printer client 200 can communicate each other by discriminating each other through the internet INet as shown in Fig. 1. In the printing system of the invention, any network system can be employed without being limited to the internet INet, provided that the service side server 100 and the printer client 200 can communicate each other. For example, each node can also be connected with exclusive lines or public lines. Further, dispersion processing by plural server computers residing on the same LAN is possible for service side server 100.

With respect to service side server 100 explained in Fig. 3, it has been explained by an example wherein main control section 11, text data storage section 12, data conversion section 13, compression section 14, encryption section 15, collating section 16, communication section 17, abstract data storage section 18, comparison table storage section 19, accounting section 20, detecting section 21, address storage section 22, estimate preparing section 23, estimate storage section 24, and job ID issuing section 25 are provided on one server. However, these sections can also be dispersed on plural servers. For example, when there is employed a structure wherein each of plural servers is provided with a hard disc representing text data storage section 12 and each disc is mounted on a file system of one server, the service side server 100 is composed of these plural servers. When there is employed a structure wherein each server is provided with either one or several of data conversion section 13, compression section 14, encryption section 15, collating section 16, communication section 17, abstract data storage section 18, comparison table storage section 19, accounting section 20, detecting section 21, address storage section 22, estimate preparing section 23, estimate storage section 24, and job ID issuing section 25, in addition to the server provided with text data storage section 12, the service side server 100 is composed of these plural servers.

Further, a plurality of service side servers 100 may also reside. When a plurality of service side servers 100 reside, it is preferable to arrange so that any service side server 100 can be selected freely when a user operates printer client 200.

Further, when printer client 200 is composed of a personal computer and a printer, it is preferable that encryption section 46 is provided on the printer. If a hardware-like or software-like module that conducts decrypting is provided on the printer side, it is not necessary to provide the whole of encryption section 46 on the printer side. When the module executing decrypting is provided on the personal computer side, there is a possibility that copy of received text data is possible, but, when the module is provided on the printer side, copyright protection level is enhanced, because there hardly is possibility that the received text data are copied.

Though there has been explained in the example mentioned above that the text data are also encrypted with a public key to be transmitted, it is also possible to encrypt with a common key encryption by transmitting from the data base a common secret key for a common key encryption system, prior to transmission of text data.

In this case, it is preferable that a different secret key is generated for each transmission of text data from the data base. When an amount of text data is large, the common key encryption system makes it possible to conduct higher speed processing, because an amount of processing required by encryption is reduced.

In the example stated above, a public key encryption system has been an assumption. However, it is also possible to conduct between each printer client 200 and service side server 100 (service side server 100, 20, service side server 100) with different common secret key encryption system. As a concrete encryption system, DES, AES, triple DES and RSA system which are known can be used. In this case, ANSIX9.30 can also be used as a signature.

For obtaining the characteristic value mentioned above when signing, it is possible to use SHA-1 and MD5.

Further, ECDSA can be used for encryption and signature.

With respect to an encryption technology, there exist the following documents which can be applied to the invention as the encryption technology.
Reference Document (1)
   Digital signature and encryption technology December 24, 1997 First edition
   Authors Warwick Ford and Michael S. Baum
   Translator Shin-ichiro Yamada
   Supervisor VeriSign Japan K.K.
   Publisher Yukio Mitsuwa
   Editor Koji Suzuki
   Publishing office Pearson Education Japan
Reference Document (2)
   PGP encryption mail and electronic signature April 15, 1996 First Edition
   Author Simon Garfinkel
   Chief translator Kazuhiko Yamamoto
   Translator Unitec Corporation
   Publisher/Editor Yumiko Kawamura
   Editor/Producer Spec Corporation
   Publishing office O'Reilly Japan, Inc.
   Sold by Ohmsha,Ltd.

In the explanation above, there has been shown an example wherein service side server 100 selects from abstract data stored in abstract data storage section 18 the abstract data which can be transmitted to printer client 200. In the printing system of the invention, however, it is also possible to employ the structure wherein abstract data capable of being transmitted are generated by the service side server to comply with a request of printer client 200.

In the printing system of this kind which is different, in terms of structure of the service side server, from the printing system explained in Figs. 1 - 7, but is the same, in terms of structure of the printer client, as the printing system explained in Figs. 1 - 7, the service side server and the printer client conduct transmission and receiving respectively through the internet INet.

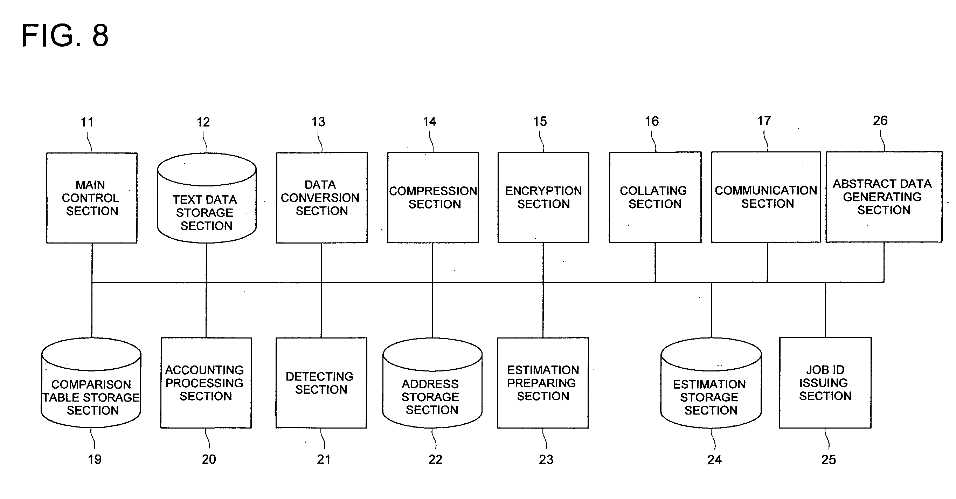

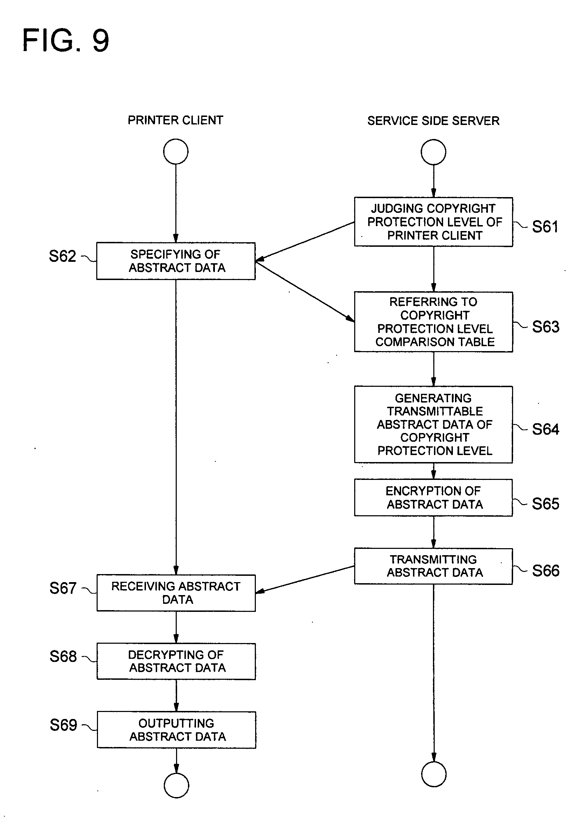

The printing system of the second embodiment will be explained as follows, referring to Fig. 8 and Fig. 9. In the explanation of the printing system of the second embodiment, explanation for the basic structure and for the printer client will be omitted, and there will be explained a block diagram that illustrates the detailed structure of the service side server related to the printing system of the second embodiment in Fig. 8, and a flow chart that further illustrates in detail transmitting and receiving of abstract data executed by the printing system of the second embodiment in Fig. 9.

In Fig. 8, service side server 100a is of the structure wherein abstract data storage section 18 is eliminated from the service side server 100 explained already and abstract data generating section 26 is added, and in addition to the foregoing, it is provided with main control section 11, text data storage section 12, data conversion section 13, compression section 14, encryption section 15, collating section 16, communication section 17, comparison table storage section 19, accounting section 20, detecting section 21, address storage section 22, estimate preparing section 23, estimate storage section 24, and job ID issuing section 25, which are connected each other by an internal bus, which is the same as the service side server 100.

The abstract data generating section 26 is an example of a specific means of the invention, and is further an example of a generating means, and it generates abstract data in prescribed procedures based on text data stored in text data storage section 12.

With respect to abstract data generating section 26, when generating text data only by omitting image data and layout information from the aforesaid (A) text data, for example, as abstract data, the abstract data generating section 26 discriminates text data included in the text data, image data and layout information to output text data only, for generating abstract data.

With respect to abstract data generating section 26, when generating an abstract of the aforesaid (B) text data as abstract data, the abstract data generating section 26 judges a range to be extracted from the text data to output for generating abstract data.

With respect to abstract data generating section 26, when generating data obtained by bit-mapping the data of each page of the aforesaid (C) text data as abstract data, the abstract data generating section 26 bit-maps the text data through a printer description language to output for generating abstract data.

In accordance with copyright protection level of printer client 200 checked in collating section 16, the comparison table storage section 19 stores a table (hereinafter referred to as a copyright protection level comparison table) showing correspondence of the copyright protection level of the abstract data which can be transmitted to the printer client 200.

Therefore, when the printer client 200 specifies the abstract data to be downloaded and transmits the results of specifying to service side server 100a, the service side server 100a receives this, then, compares the copyright protection level capable of being transmitted with the results of the specifying to judge, and judges whether it is possible to transmit the abstract data relating to the result of the specifying to the printer client 200 or not. Then, when the transmission is possible, the abstract data are generated at the abstract data generating section 26 based on the text data.

The printing system of the second embodiment equipped with service side server 100a provided with the structure of this kind operates roughly in the procedures explained in the flow charts shown in Figs. 6 and 7. Since procedures explained in the flow charts shown in Figs. 6 and 7 are different, the different points will be explained in detail as follows, referring to the flow chart in Fig. 9.

In the case of authentication in step 12 in Fig. 6, service side server 100a judges copyright protection level of printer client 200, in the same way as in step 51, by means of a code showing the copyright protection level (S61).

After being authenticated, the printer client 200 specifies abstract data to be downloaded and transmits the result of the specifying to service side server 100a (S62).

After receiving the result of the specifying of the abstract data, the service side server 100a refers to a code showing the copyright protection level obtained in step 61 and to a copyright protection level comparison table (S63), and generates abstract data of the copyright protection level that can be transmitted to printer client 200 (S64).

Further, the service side server 100a conducts encryption on the generated abstract data (S65) and transmits them to printer client 200 (S66).

After receiving the abstract data (S67), the printer client 200 decrypts (S68), and outputs (prints or displays) abstract data (S69).

A user can check the result of outputting visually and can judge whether the result of outputting represents desired text data or not.

In the second embodiment again, it is possible to employ the structure wherein a series of processing relating to the abstract data are conducted at any step in a range of steps from the moment when copyright protection level of printer client 200 at step 3 in Fig. 6 up to the moment when printer client 200 places an order at step 19. Namely, it is possible either to employ the structure wherein abstract data are outputted after printing comparison data are specified in step 15, or to employ the structure wherein abstract data are outputted after the estimate data are displayed at step 18.

In the printing system of the invention, it has become possible for a user to output contents of digital data in advance to confirm them, and thereby, the situation to pay for unnecessary data has been reduced, and the condition remarkably disadvantageous for a purchaser has been corrected.

## Claims

1. A printing system, comprising:
a service server system from which data is downloaded and further comprising:
a) a means for acquiring information to specify a printer client, requesting an access to said service server system, from said printer client; and
b) a means for specifying abstract data, allowed to be transmitted to said printer client, in accordance with a copyright protection level; and
said printer client for downloading said abstract data and conducting image output in accordance with said abstract data.

2. The printing system of claim 1, wherein said printer client includes a protection means for protecting said abstract data, in a data transmission path to conduct image output, against outside access.

3. The printing system of claim 2, wherein said printer client includes:
a decrypting means for decrypting said abstract data; and
an output means for conducting image output in accordance with said abstract data;
wherein said protection means protects said abstract data, in said data transmission path from said decrypting means to said output means, against outside access.

4. The printing system of claim 3, wherein said output means is an image forming means for forming an image on a recording medium.

5. The printing system of claim 3, wherein said output means is an image displaying means for displaying an image.

6. The printing system of claim 2, wherein said protection means is a physical cover member.

7. The printing system of claim 2, wherein said protection means is a filter program software.

8. The printing system of claim 2, wherein said protection means is a combination of a physical cover member and a filter program software.

9. The printing system of claim 2, comprising:
a comparison table for recording said copy right protection level of said abstract data and a copy right protection level of said printer client in relation to each other; and
a selection means for selecting said abstract data to be sent to said printer client in accordance with said copy right protection level of said printer client by looking up said comparison table for said copy right protection level of said abstract data.

10. The printing system of claim 9, wherein said copy right protection level of said printer client in said comparison table is set in different levels in accordance with said protection means of said printer client.

11. The printing system of claim 9, wherein said copy right protection level of said abstract data in said comparison table is set in different levels in accordance with difficulty of decryption of said abstract data.

12. The printing system of claim 1, wherein said service server system comprises an encrypting means for encrypting said abstract data so as to provide encrypted abstract data and said printer client downloads said encrypted abstract data.

13. The printing system of claim 12, wherein said printer client comprises a decrypting means for decrypting said encrypted abstract data, downloaded from said service server system.

14. The printing system of claim 1, wherein said service server system executes a digital signature with an encryption key, uniquely assigned to said printer client, when said printer client performs an access to said service server system.

15. The printing system of claim 1, wherein said service server system executes a digital signature with an encryption key of an open key encryption method when said printer client performs an access to said service server system.

16. The printing system of claim 1, wherein said printer client executes a digital signature with an encryption key, uniquely assigned to said printer client, when said printer client performs an access to said service server system.

17. The printing system of claim 1, wherein said service server system comprises a memory means for storing a plurality of preformed abstract data and specifies said abstract data by selecting it from said plurality of performed abstract data.

18. The printing system of claim 1, wherein said service server system comprises a memory means for storing plurality of abstract data, each of which is preformed in correspondence with respective copyright protection level, and specifies said abstract data by selecting it from said plurality of abstract data.

19. The printing system of claim 1, wherein said service server system comprises a generating means for generating abstract data, corresponding to a copy right protection level for sending said abstract data to said printer client, so that said service server system specifies said abstract data.

20. The printing system of claim 1, wherein said printer client comprises a search requesting means for generating a search request to said service server system and said service server system performs search for said abstract data in response to said search request by said search requesting means.

21. A printing system, comprising:
a service server system from which data is downloaded and further comprising:
a) a means for certifying a login request from a printer client;
b) a means for specifying abstract data, allowed to be transmitted to said printer client, in accordance with a copyright protection level of said printer client; and
said printer client for conducting image output in accordance with said data and further comprising;
a) a means for generating a login request to said service server system;
b) a means for specifying desired abstract data and for notifying download request of said desired abstract data to said service server system;
c) a means for downloading transmission form data, generated by an encryption process based on said desired abstract data, from said service server system; and
d) a means for decrypting said transmission form data and conducts image output of said desired abstract data.

22. The printing system of claim 21, wherein said service server system comprises a memory means for storing a plurality of preformed abstract data and specifies said abstract data by selecting it from said plurality of performed abstract data.

23. The printing system of claim 21, wherein said service server system comprises a memory means for storing plurality of abstract data, each of which is preformed in correspondence with respective copyright protection level, and specifies said abstract data by selecting it from said plurality of abstract data.

24. The printing system of claim 21, wherein said service server system comprises a generating means for generating abstract data, corresponding to a copy right protection level for sending said abstract data to said printer client, so that said service server system specifies said abstract data.

25. A printer client for conducting image output in accordance with data, downloaded form a service server system, further comprising;
a means for generating a login request to said service server system;
a means for specifying desired abstract data and for notifying download request of said desired abstract data to said service server system;
a means for downloading transmission form data, generated by an encryption processing based on said desired abstract data, from said service server system; and
a means for decrypting said transmission form data and conducts image output of said desired abstract data.

26. A service server system from which data is downloaded and further comprising:
a means for certifying a login request from a printer client;
a means for specifying abstract data, allowed to be transmitted to said printer client, in accordance with a copyright protection level of said printer client; and
a means for controlling said printer client so as to download transmission form data, generated by an encryption process based on said abstract data.

27. The service server system of claim 26, wherein said service server system comprises a memory means for storing a plurality of preformed abstract data and specifies said abstract data by selecting it from said plurality of performed abstract data.

28. The service server system of claim 26, wherein said service server system comprises a memory means for storing plurality of abstract data, each of which is preformed in correspondence with respective copyright protection level, and specifies said abstract data by selecting it from said plurality of abstract data.

29. The service server system of claim 26, wherein said service server system comprises a generating means for generating abstract data, corresponding to a copy right protection level for sending said abstract data to said printer client, so that said service server system specifies said abstract data.

30. A printing system, comprising:
a printer client for conducting image output in accordance with data, downloaded from a service server system, and further comprising:
a) a decrypting means for decrypting encrypted abstract data so as to obtain abstract data;
b) an outputting means for conducting image output of said abstract data; and
c) a protecting means for protecting said abstract data in a transmission path, from said decrypting means to said outputting means, against outside access;
said service server system from which said data is downloaded and further comprising:
a) a comparison table in which a copyright protection level of said printer client, established stepwise in accordance with said protecting means, is stored in relation to a copyright protection level of said abstract data, established stepwise in accordance with difficulty of decryption of said abstract data;
b) a specifying means for specifying said abstract data, to be transmitted to said printer client, by referring said comparison table for said abstract data in accordance with said copyright protection level of said printer client; and
c) an encrypting means for encrypting said abstract data so as to generate said encrypted abstract data;
wherein said service server system obtains information for specifying said printer client from said printer client requesting access to said service server system so as to specify and encrypt said abstract data; and said printer client downloads said abstract data, specified and encrypted by said service server system, so as to conduct decryption and image output of said abstract data.

31. The printing system of claim 30, wherein said service server system comprises a memory means for storing a plurality of preformed abstract data and specifies said abstract data by selecting it from said plurality of performed abstract data.

32. The printing system of claim 30, wherein said service server system comprises a memory means for storing plurality of abstract data, each of which is preformed in correspondence with respective copyright protection level, and specifies said abstract data by selecting it from said plurality of abstract data.

33. The printing system of claim 30, wherein said service server system comprises a generating means for generating abstract data, corresponding to a copy right protection level for sending said abstract data to said printer client, so that said service server system specifies said abstract data.
